# EUROPEAN PATENT SPECIFICATION

(11) **EP 4 288 268 B1**
(45) Date of publication and mention of the grant of the patent: **18.03.2026**
(21) Application number: 22703697.7
(22) Date of filing: 03.02.2022
(51) Int. Cl.: B29C 48/92, B29C 48/02, B29C 48/255, B29C 64/106, B29C 64/209, B33Y 10/00, B33Y 30/00, B29C 64/182

(54) **INTEGRATED ADDITIVE MANUFACTURING APPARATUS AND METHOD**
VORRICHTUNG UND VERFAHREN ZUR INTEGRIERTEN GENERATIVEN FERTIGUNG
APPAREIL ET PROCÉDÉ DE FABRICATION ADDITIVE INTÉGRÉE

(30) Priority: 04.02.2021 GB 202101534
(43) Date of publication of application: 13.12.2023
(73) Proprietor: University of Strathclyde, Glasgow G1 1XQ (GB)
(72) Inventor: ANWAR, Ali Ahmed, Blanefield G63 9JG (GB); HALBERT, Gavin William, Glasgow G1 1XQ (GB); ROBERTSON, John, Glasgow G1 1XQ (GB)
(74) Representative: Marks & Clerk LLP
(86) International application number: PCT/GB2022/050281
(87) International publication number: WO 2022/167799

(56) References cited:
- EP-A1- 3 626 439
- GB-A- 2 585 638

## Description

### Field of the invention

The present disclosure relates to an apparatus for dispensing a pharmaceutical composition to prepare solid pharmaceutical dose forms, for example by additive manufacturing.

### Background

Additive Manufacturing (AM) is a name used to describe technologies that build 3D objects by printing material layer-upon-layer (i.e. additive) using various materials. AM and 3D printing are commonly used interchangeably, although the former is a broader and all-inclusive term, while the latter specifically involves the creation of objects by building layers of material. Additive manufacturing involves the creation of objects by adding material, which may or may not come in layers.

3D printers are generally operated using a computer-based system which controls the three-dimensional movement of individual parts and also the flow of material creating the desired form. A Fused Filament Fabrication (FFF) printer utilizes this methodology with an incorporated heated printer head, through which the material flows. The material is fed through as a solid filament (having specific dimensional and mechanical properties) and is mobilised as it is heated and melted thus enabling the material to flow through a nozzle. The material exiting the nozzle is deposited in sequential layers onto a surface where it solidifies to create the 3D object.

Recent developments have used FFF printers to create pharmaceutical products such as oral dosage form drugs. However, this technique necessitates pre-preparation of a drug-loaded filament, which requires creating the filament first and then feeding it into the 3D printer, to allow a tablet (or another dose form) to be printed. Early work utilised pre-made filaments being immersed in a drug-solvent solution and deposition of the drug into the filament by infusion. More recent efforts have used Hot Melt Extrusion (HME). Typically, a mixture of polymer and Active Pharmaceutical Ingredient (API) is fed to an extruder, which is then heated, kneaded, conveyed and extruded through a die as a fluid and then cooled to form a solid filament. The filament is fed into a 3D printer, at which point it is re-heated and deposited as a 3D object e.g. into the form of a tablet form. See Zhang et al., Coupling 3D Printing with Hot-Melt Extrusion to Produce Controlled-Release Tablets, International Journal of Pharmaceutics, vol. 519, pp. 186-197 (2017).

One of the main limitations of such techniques is that the immersion technologies only allow a very small loading of drug into the filament. The HME-based approach (whereby a filament intermediate is created) requires the filament to have very specific properties - and particular dimensional properties (especially diameter) to enable the mechanics of the FFF 3D printer to operate and control deposition rate. Additionally, the filament has to have very specific mechanical properties, for example so that it can be fed through the FFF printer without breaking due to brittle fracture or deforming as a result of being too soft. These disadvantages represent significant limitations in the use of these technologies. The formed filament also needs to have suitable stability properties to enable its use over time.

As a result of these limitations, choice of drug loadings and formulation ingredients (especially polymer) is limited because the final formulation is driven by the constraints encountered during the processing across the basic unit operations. It is a object of the present invention to address or mitigate at least one of the problems associated with the prior art.

The document EP 3 626 439 A1 discloses a 3D printing device, including a first melt extrusion module, a first printing module, and a platform module. The first melt extrusion module includes a processing chamber having a feed inlet and a discharge outlet, and an extrusion apparatus and a heating apparatus that are disposed in the processing chamber. The first printing module is connected to the discharge outlet of the processing chamber, and has a first nozzle. The first printing module is configured to receive the first melt extruded from the discharge outlet of the processing chamber and guide the first melt to be extruded through the first nozzle.

The document GB 2 585 638 A discloses a print head for a 3D printer, the print head comprising a print material inlet, a print material outlet and an adjustable volume extrusion chamber, all connected by a conduit system, wherein the print material inlet is connectable to a source of print material, and wherein the conduit system comprises one or more valves operable to switch the print head between at least two configurations, the at least two configurations comprising, a first configuration wherein the print material inlet and adjustable volume extrusion chamber are in fluid communication with each other, but not with the print material outlet, via the conduit system; and a second configuration wherein the adjustable volume extrusion chamber and the print material outlet are in fluid communication with each other, but not with the print material inlet, via the conduit system.

### Summary

According to a first aspect there is provided a dispensing apparatus according to claim 1. A method of dispensing a pharmaceutical composition is set out in claim 13. A method of manufacturing a solid pharmaceutical dose form is defined in claim 15.

### Brief Description of Drawings

Embodiments of the present disclosure will now be given by way of example only, and with reference to the accompanying drawings, which are:
**Figure 1** a schematic view of a system according to an embodiment;
**Figure 2** a cross-sectional view of the dispensing apparatus of the system of Figure 1;
**Figure 3** a cross-sectional view of the dispensing apparatus of Figure 2 along line (A-A);
**Figure 4** a cross-sectional view of a regulating module of the dispensing apparatus of Figure 2, in a first configuration;
**Figure 5** a cross-sectional view of a regulating module of the dispensing apparatus of Figure 2, in a second configuration;
**Figure 6** a cross-sectional view of a regulating module of the dispensing apparatus of Figure 2, in a third configuration;
**Figure 7** a dispensing apparatus according to another embodiment;
**Figure 8** a cross-sectional view of the dispensing apparatus of Figure 7 along line (B-B);
**Figure 9** a cross-sectional view of the dispensing apparatus of Figure 7 along line (C-C);
**Figure 10** a front view of the printing apparatus of the system of Figure 1;
**Figure 11** an elevated side view of the printing apparatus of Figure 10;
**Figure 12** a system according to another embodiment including a recirculation unit;
**Figure 13** an enlarged view of the recirculation unit of the extruding apparatus of Figure 12.

### Detailed Description

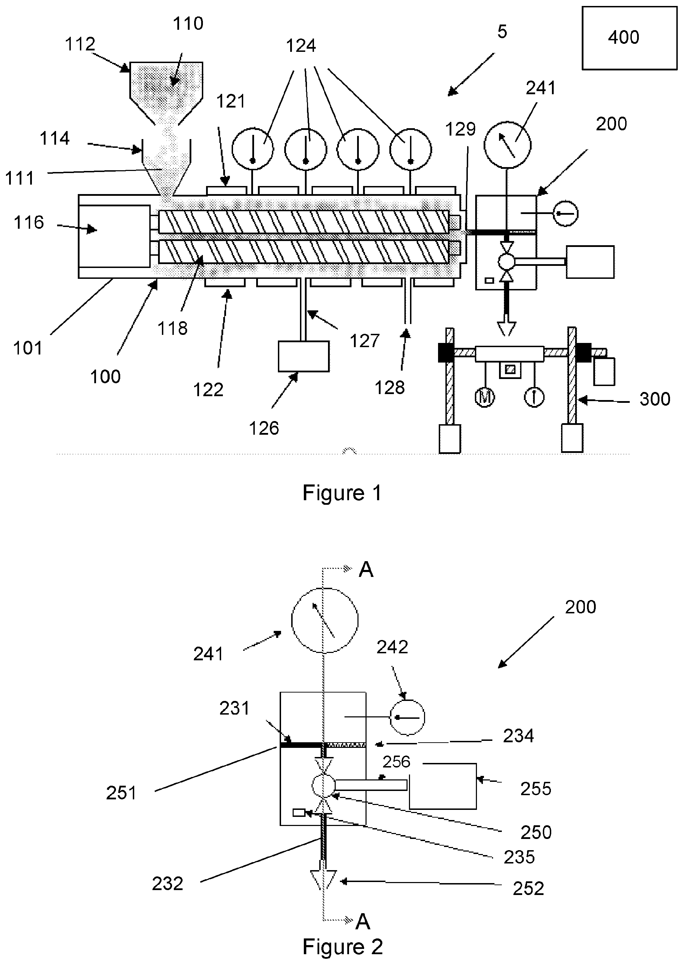

Referring to **Figure 1** there is shown a system 5 according to a first embodiment. The system 5 includes an extrusion apparatus 100, a 3D printing apparatus 300, and a dispensing apparatus 200 provided between the extrusion apparatus 100 and a printing platform 310 of the printing apparatus 300.

The system 5 also includes a control unit 400, e.g. a computer, to receive information from one of more sensors of the system 5, and/or control and/or adjust one or more parameters of the system 5, including temperature, feed rate, pressure, flow valve, regulating module, etc, as will be discussed below in more detail.

The extrusion apparatus 100 includes a hopper 112 configured to receive a material or a mixture of materials 110, which in this embodiment is provided in solid form such as powder or granules. The hopper 112 has agitation means (not shown) such as an impeller or vibrating elements so as to improve mixing and also avoid agglomeration and/or blockages.

The hopper 112 is equipped with a measuring device (not shown) which allows measuring and/or monitoring an amount, typically weight, of the material 110 being fed to the extruder 101.

The extruder 101 has a funnel 114 configured to receive the material 110 from the hopper 112. The funnel 114 is configured to feed the composition 111 to the extruder 101.

The extruder 101 is a melt extruder 101 having moving means 118 configured to convey the composition 111 within an internal chamber thereof. In this embodiment, the moving are in the form of twin screws 118 which are powered by a motor and transmission 116.

The extrusion apparatus 100 has a number of temperature sensors 124 to measure temperature along its length. Temperature sensors 124 may communicate with control unit 400.

The extrusion apparatus 100 also has a number of heating elements 122 and cooling elements 121 to regulate and/or adjust temperature or the composition 111 within the extruder 101, e.g. along its length. The heating/cooling elements 121,122 can be provided in various shapes and sizes such as but not limited to fluid jackets, cartridge heater, ceramic strip heater, or flexible heating elements, and can reach temperatures sufficiently high to transform the materials 110 from a solid to a mobilised fluid state reducing its resistance to motion along the flow path and making the composition 111 suitable for 3D printing. The heating/cooling elements 121,122 may be controlled and/or adjusted by the control unit 400.

It will be appreciated that the precise operating ranges and conditions of the extruding apparatus 100, including for example composition feed rate, rotation speed, and temperature, may vary and may depend on the properties of the materials 110 used, including properties such as melting point(s) of the material(s) 110, melt viscosity and/or rheology of the composition 111, chemical stability of the material(s) 110, etc.

The extrusion apparatus 100 further includes a pump 126 and feeding tube 127 to allow optional feeding of an additive, typically a liquid additive, to the melt zone of the extruder 101. This can allow the incorporation of fluid components such as but not limited to liquid plasticizers.

The extrusion apparatus 100 further includes a vent port 128 which is configured to allow venting of any build up or undesired gases to the external environment.

The composition 111 exists the extruder 101, typically in a molten state, via extruder outlet 129.

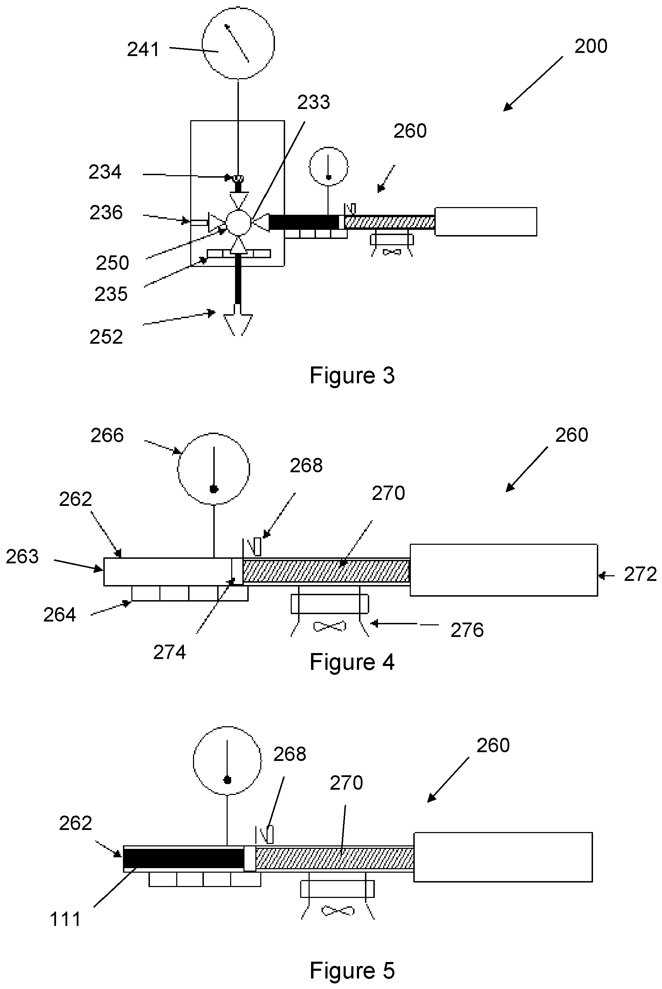

Referring to **Figures 2** **and** **3** there are shown cross-sectional views of the dispensing apparatus 200 of the system 5 of Figure 1.

The dispensing apparatus 200 has an inlet 251 configured to be in fluid communication with the extruder outlet 129. This is particularly advantageous when the composition 111 is a pharmaceutical composition. For example, this may avoid the need for the pre-preparation of filaments of pharmaceutical composition, which are associated with the limitations discussed above relating to mechanical properties of the filament, filament dimensions, and amounts/concentrations of API in the filament. For example, the present arrangement may allow the printing of various dose forms of pharmaceutical compositions having higher ratios of API to polymer/excipient than previously possible, and/or the use of a wider range of formulation ingredients.

The dispensing apparatus 200 also has an outlet 252 configured for dispensing the composition 111, the outlet 252 being in fluid communication with a printing nozzle 252 of printing apparatus 300.

The dispensing apparatus 200 includes a directional flow valve 250 located between the inlet 251 and the outlet 252.

The dispensing apparatus 200 defines an inlet conduit 231 between the inlet 251 and the directional flow valve 250.

The dispensing apparatus 200 defines an outlet conduit 232 between the directional flow valve 250 and the outlet 252.

The dispensing apparatus 200 includes a regulating module 260 which is in fluid communication with the directional flow valve 250. The dispensing apparatus 200 defines a regulation conduit 233 between the directional flow valve 250 and the regulation module 260 to allow flow of the composition 111 through the regulation conduit 233. The regulating module 260 is configured to control and/or regulate flow of the composition 111 to the outlet 252. The outlet is in fluid communication with a printing nozzle 252.

The directional flow valve 250 is associated with an actuator which in this embodiment includes a motor 255 coupled to a drive shaft 256, allowing the motor 255 to actuate the flow valve 250.

The valve actuator 255 is in communication with the control unit 400, such that the control unit 400 is capable of actuating the directional flow valve 250, either or both automatically or manually (e.g. by a user).

The dispensing apparatus includes temperature sensor 242 and pressure sensor 241 to measure and/or monitor temperature and pressure, respectively, of the composition 111. Advantageously, the temperature sensor 242 and pressure sensor 241 are in communication with the control unit 400.

The dispensing apparatus includes a heating element 235 configured to control, maintain and/or adjust the temperature of the composition in the dispensing elements, e.g. in the inlet conduit outlet conduit 231 and/or outlet conduit 232. Advantageously, the heating element 235 is in communication with the control unit 400.

There is provided a discharge port 234 in fluid communication with the inlet conduit 231. The first discharge port 234 may allow the directional flow valve 250 to discharge the composition 111 from the dispending apparatus 200, for example when one or more properties of the composition 111 (e.g. pressure, temperature, or viscosity) are not optimum and/or when filling of the regulation module 260 is not required or desired.

There is provided an access port 236 in fluid communication with the directional flow valve 250 and/or flow path 231,232. The access port may allow the use of analytical means, e.g. analytical devices such as Process Analytical Tools (PAT) or spectroscopy devices, to monitor and/or analyse the composition 111.

In use, directional flow valve 250 has a number of configurations to selectively direct flow of the composition 111 within the dispensing apparatus 200.

The directional flow valve 250 has a first or "feed" configuration configured to allow flow of the composition 111 from the inlet 251 to the regulating module 260. In the first or "feed" configuration, the directional flow valve 250 allows filling of the regulating module 260 with the composition 111.

The directional flow valve has a second or "dispense" configuration configured to allow flow of the composition 111 from the regulating module 260 to the outlet 252. In the second or "dispense" configuration, the directional flow valve may 250 allows the regulating module 260 to dispense the composition 111 to the outlet 252.

The first or "feed" configuration and the second or "dispense" configuration are mutually exclusive. That is, the composition 111 may either flow from the inlet 251 to the regulating module 260 or may flow from the regulating module 260 to the outlet 252.

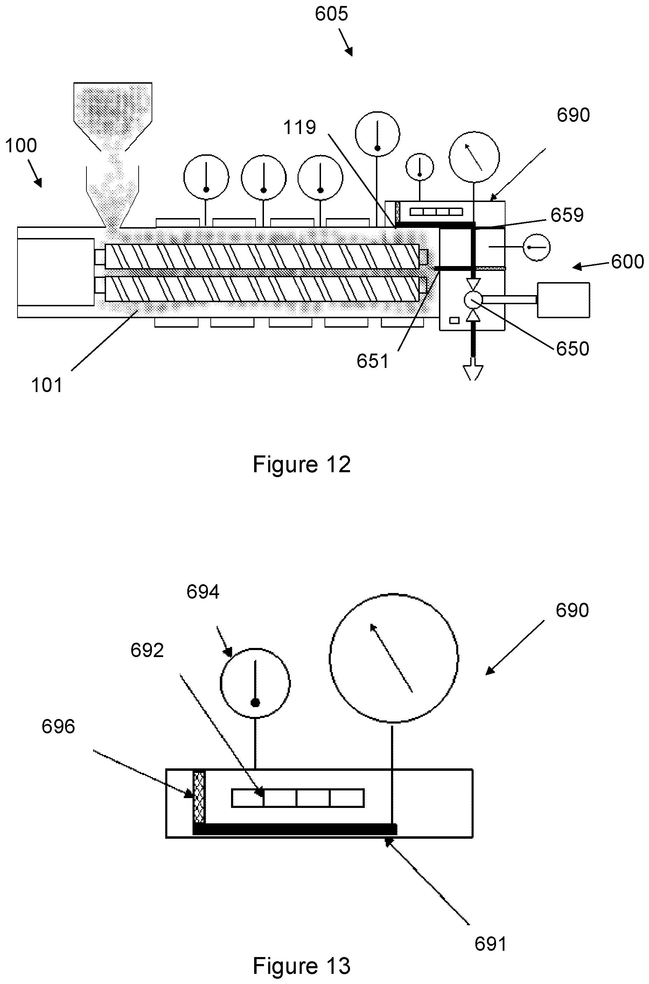

Not shown in the embodiment of Figure 1, but described in the embodiment of Figure 12, the directional flow valve 250 may optionally have a third or "recirculation" configuration configured to allow flow of the composition 111 from the 251 inlet to a recirculation outlet, as will be described later in detail.

In this embodiment, the directional flow valve 250 has a fourth or "discharge" configuration configured to allow flow of the composition 111 from the inlet 251 to a first discharge port 234. By such provision, the composition 111 may be discharged from the dispensing apparatus 200, for example when one or more properties of the composition 111 (e.g. pressure, temperature, or viscosity) are not optimum and/or when filling of the regulation module 260 is not required or desired.

The directional flow valve also has a fifth or "closed" configuration configured to prevent flow of the composition 111 within the dispensing apparatus 250. In other words, in the fifth or "closed" configuration, the composition 111 may not flow from the inlet 251 or to the outlet 252.

The regulating module 260 of the dispensing apparatus 200 of Figures 2 and 3, will now be described in more detail with reference to **Figures 4 to 6.**

As shown in **Figure 4,** the regulating module 260 has a chamber 262 configured to receive the composition 111.

The chamber has a chamber inlet 263 in fluid communication with the directional flow valve 250 and the regulation module conduit 233.

The regulating module 260 has a regulation actuator 252 configured to actuate filling of the chamber 262 with the composition 111 and dispensing of the composition 111 from the chamber 262.

The regulation actuator 252 includes a motor which drives a piston 270 that reciprocates within the chamber 262. The regulation actuator 252 is associated with and can be controlled and/or operated by the control unit 400, for example in response to one or more parameters measured in the system 5 such as pressure, temperature, viscosity, piston position, or the like.

The volume of the chamber 262 is partially defined by an end 274 of the piston 270 at an end of the chamber 262 opposite the chamber inlet 263.

The regulating module has a temperature sensor 266 provided at or near the regulation chamber 262. Advantageously, the temperature sensor 266 is associated with the control unit 400.

The regulating module 260 also has a heating element 264 configured to control, regulate and/or adjust the temperature of the composition 111 in the regulation module 260. Advantageously, the heating element 264 is associated with and can be controlled and/or operated by the control unit 400, for example in response to information obtained by the temperature sensor 266.

The regulating module 260 also has a cooling element 276 (here in the form of a heat sink). The cooling element 276 may be configured to control, regulate and/or adjust the temperature of the composition 111 in the regulation module 260. Alternatively, or additionally, the cooling element 276 may be configured to prevent the actuator, e.g. motor 252, from overheating, in use. Advantageously, the cooling element 276 is associated with and can be controlled and/or operated by the control unit 400, for example in response to information obtained by the temperature sensor 266.

The regulating module 260 includes a positioning sensor 268 configured to detect the position of the piston head 274 within the chamber 262. For example, when the chamber 262 is being filled with composition 111, the positioning sensor 268 may detect when the piston head reaches its fully retracted position, thus indicating that the chamber 262 is full. Advantageously, the positioning sensor 268 is associated with the control unit 400. When the control unit detects receives a signal from the positioning sensor 268, the control unit 400 may act to cause the actuator 252 to stop moving piston 270.

Referring to **Figure 4,** the regulating module 260 is shown in a first configuration in which the piston 270 is retracted and the chamber 262 is empty.

The directional flow valve 250 is actuated into its first or "feed" configuration configured to allow flow of the composition 111 from the inlet 251 to the chamber 262 of regulating module 260. When the pressure in the chamber has reached a predetermined value, the chamber is considered to be loaded and the regulating module 260 ready to dispense the composition 111 in an accurate volumetric manner, as shown in **Figure 5.**

The directional flow valve 250 is therefore switched to its second or "dispense" configuration (for example by control unit 400) so as to allow flow of the composition 111 from the chamber 262 of the regulating module 260 to the outlet 252 and thus to the printing apparatus 300. During this phase, the actuator 272 acts (for example via a command from control unit 400) to move the piston 270 in the chamber 262 so as to dispense composition 111. When the piston 270 is fully extended and/or when the piston head 270 reaches an inlet end 263 of the chamber 262, the actuator 272 may be stopped, e.g. via a command from control unit 400. The actuator 272 may then be reversed to retract the piston 262 and open the chamber 262, ready to be filled with another load of composition 111 by moving the flow valve 250 to its first or "feed" configuration.

The movement of the piston 270 is accurately controlled by the actuator 272 and control unit 400 to allow control of the exact volumetric displacement of the composition 111 and hence dispensing rate to the outlet 252 (and thus to printing apparatus 300).

In an embodiment, the dispensing apparatus 200 may further include or may be coupled with an analysing device (not shown) configured to monitor at least one parameters of the composition within the dispensing apparatus 200. For example, analysing device may comprise analytical apparatus and/or Process Analytical Tools (PAT), such as but not limited to spectroscopic or physical measurement devices. This may be permitted by using an opening or port such as the access port 236 to enable coupling with or association with the analytical apparatus. Such tools can be used for, but not limited to, detect homogeneity of the materials in the flow path, materials concentration in a mixture or other species/property identification.

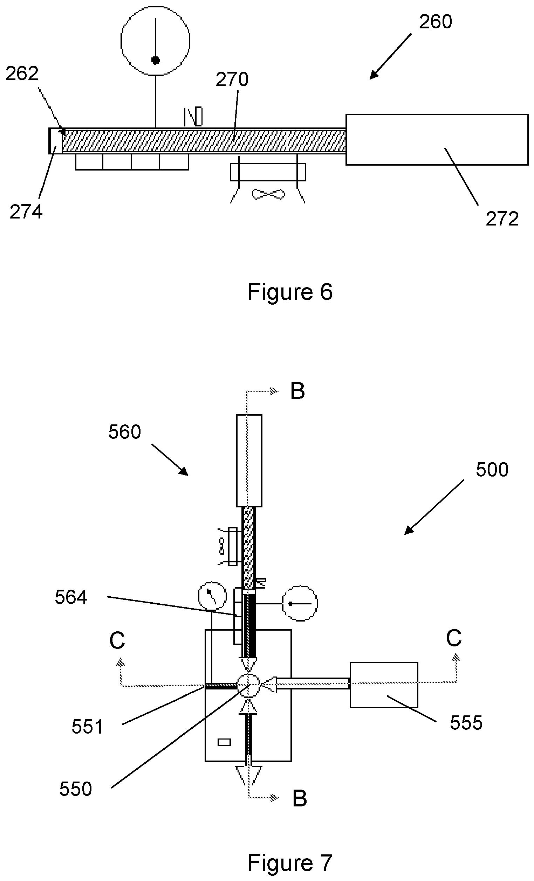

Referring now to **Figures 7 to 9****,** there is shown a dispensing apparatus 500 according to another embodiment. The dispensing apparatus 500 is generally similar to the dispensing apparatus 200 of Figures 2 and 3, like parts being denoted by like numerals, incremented by '300'.

As in Figures 2 and 3, the dispensing apparatus 500 of Figures 7 to 9 has an inlet 551 configured to be in fluid communication with the extruder outlet 129. However, in this embodiment, the dispensing apparatus 500 includes four directional flow valves 550, each in fluid communication with the inlet 551 and defining respective inlet conduits 531.

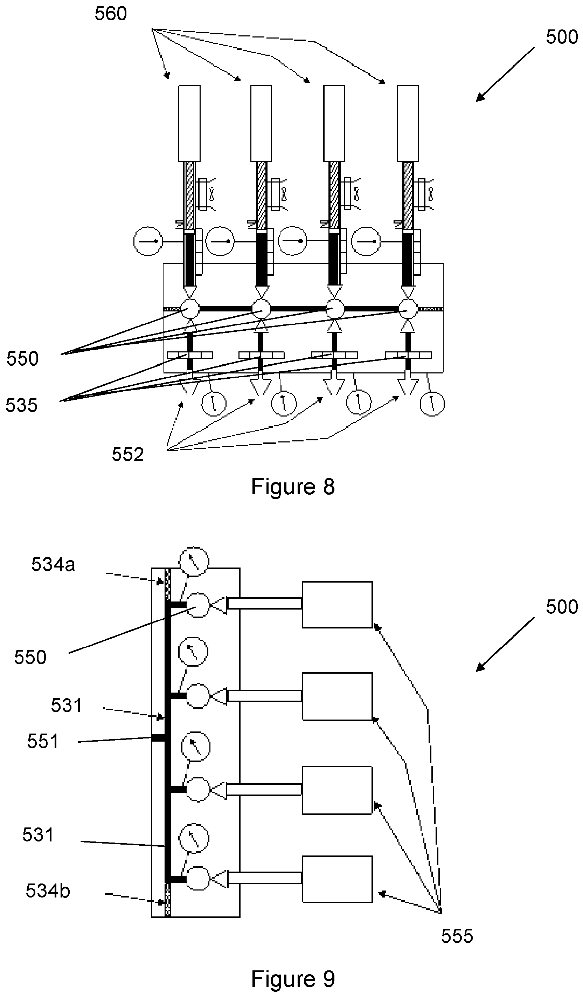

As best shown in **Figure 9****,** each directional flow valve 550 is associated with a respective valve actuator 255, such that each directional flow valve 550 can be controlled and/or actuated independently, for example by control unit 400.

As best shown in **Figure 8****,** each directional flow valve 550 is associated with a respective outlet 552 and respective outlet conduits 532 between each directional flow valve 550 and a respective outlet 552. Each outlet 552 is in fluid communication with a respective printing nozzle 552.

Each directional flow valve 550 is associated with and is in fluid communication with a respective regulating module 560. Each regulating module 560 operates as described above in relation to Figures 4 to 6.

Each nozzle 552 is configured to be associated with a respective printing platform 310.

The provision of a dispensing apparatus 500 comprising a plurality of directional flow valves 550 and associated regulating modules 560 allows the system 5 to dispense the composition 111 in a continuous, semi-continuous or batch manner. Thus, the dispensing apparatus 500 allows printing, e.g. 3D printing, of the composition 111, e.g. pharmaceutical composition in dosage form, in a continuous, semi-continuous or batch manner.

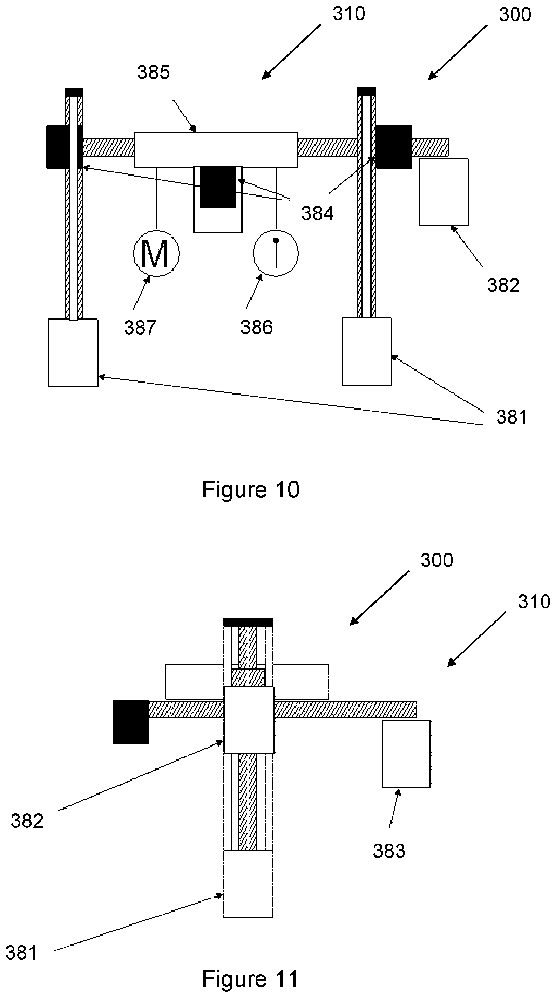

Referring to **Figures** 10 **and 11** there are shown a front view and a side view of the printing apparatus 300 of the system 5 of Figure 1.

The printing apparatus 300 includes a printing platform 310. The printing platform 310 in configured to act as support for an object being printed by a printing nozzle (not shown) which is fed by the dispensing apparatus 200,500. The printing platform 310 is capable of moving along the X, Y and Z axis. It has a linear stepper motor or other conventional drive mechanism 381 to control the z-axis motion. It has a linear stepper motor or other conventional drive mechanism 382 to control the x-axis motion. It also has a linear stepper motor or other conventional drive mechanism 383 to control the y-axis motion. Each motor has a respective suitable switch 384 limiting motion thereof and allowing calculation of relative position and each switch 384 can be controlled by a suitable control means such as computer (not shown).

The temperature of the print platform 310 is controlled by a heater element 385 which is associated with a temperature sensor 386. The temperature of the platform 310 may be maintained by a suitable control system such as a computer associated with the heater element 385 and temperature sensor 386.

The platform 310 receives material 111 deposited on it via a nozzle 552 which is fed by dispensing module 200,500. The weight of the material 111 deposited is determined by suitable weighing means 387 such as load cell(s) or other conventional weighing sensor(s).

In an embodiment, the material 111 deposited onto the print platform 310 may be deposited directly into or onto a suitable receiving container or packaging (not shown) placed onto the print platform 310 such as, but not limited to, blister pack(s), capsule(s), digestible container(s), either using a single or multiple nozzle arrangement and associated dispensing apparatus 200,500.

The platform 310 may be controlled by control nit 400.

In some embodiments, the layers may be set to a thickness in the range of about 0.05 mm - 3 mm, allowing control over the micro to macro structure of the product.

Referring to **Figure 12 and 13** there is shown a system 605 according to another embodiment. The system 605 of Figures 12 and 13 is generally similar to the system 5 of Figure 1, like parts denoted by like numerals, but incremented by '400' in respect of the dispensing apparatus 600.

In this embodiment, the system includes a recirculation unit 690 configured to allow recirculating of the composition 111 from the inlet 651 of the dispensing apparatus 600 to the extruder 101.

In this system 605, the directional flow valve 650 has a "recirculation" configured to allow flow of the composition 111 from the inlet 651 to a recirculation outlet 659. The recirculation outlet 659 is configured to be in fluid communication with or be associated with a flow path 691 of the recirculation unit 690. The flow path 691 of the recirculation unit 690 is in fluid communication with a recirculation inlet 119 of the extruder 101.

By such provision, the composition 111 may be recirculated into the extruder 101, for example when one or more properties of the composition (e.g. pressure, temperature, or viscosity) are not optimum and/or when filling of the regulation module 660 is not required or desired.

The temperature within the recirculation unit 690 maintained by a temperature control/heating element 692 and associated temperature sensor 694. The temperature control/heating element 692 and associated temperature sensor 694 may be in communication with control unit 400.

A suitable port 696 can be used to purge material 111 from the recirculation unit 690 and/or may be used to connect peripheral devices such as analytical devices, e.g. PAT and/or spectroscopy equipment.

### Examples

The following examples are exemplary embodiments illustrating the preparation of various compositions in oral solid dose form.

The pharmaceutical dose forms were prepared using a system similar to the system of Figure 1 described above.

### Example 1. Preparation of a Plasdone S630- Acetaminophen formulation

The particular formulation of components in this example is typically *not* suitable for printing using existing fused filament fabrication (FFF 3DP) methods, due to the limitations discussing in the background section above. In particular, Plasdone and Plasdone-Acetaminophen mixtures post extrusion are too brittle in nature to enable them to be used in existing FFF processes which require good control over filament dimensions and appropriate mechanical properties (e.g. flexural modulus). Additionally, on exiting the die of an HME process, the rheology of plasdone and plasdone acetaminophen formulations provides a challenge in control of dimensions of the extrudate by conventional means. (See for example - Prasad et al. "Development of a hot-melt extrusion (HME) process to produce drug loaded Affinisol™ 15LV filaments for fused filament fabrication (FFF) 3D printing." Additive Manufacturing, Volume 29, October 2019, which outlines these dimensional and mechanical limitations).

### (1A) PREPARATION OF SYSTEM

A powder mixture of acetaminophen and Plasdone^{™} (N-vinyl-2-pyrrolidone and vinyl acetate from Ashland) was prepared (offline) in a suitable powder mixer. The powder blend 110 was loaded to the material hopper 112. The feed rate was controlled by measuring a loss in weight of the material in the hopper 112. The feed rate was set to 0.1kg/hr.

The staged heating elements 122 of the melt extruding apparatus 100 were set to 20°C at the funnel inlet 114 and suitable temperature profile to raise the temperature of the materials 111 conveyed along the length of the extruder 101 from the feed funnel 114 to 180°C at a discharge end 129 thereof.

The screw 118 speed set point was set to 100 rpm (using controller of drive motor (118)).

The print platform 610 of the printing apparatus 300 was set to 90°C and monitored/controlled by temperature sensor 386.

Using CAD software, an oral solid dose form was drawn (in this case an 8 mm diameter by 3 mm tall cylindrical tablet shape) and a G-code file was generated to control the X-Y-Z motion of the printer platform 310 and the deposition rate/motion of the piston 270 of the regulating module 260 during the printing of the composition 111. It will be appreciated that singular or multiple dose forms can be drawn in CAD software and laid out spatially to generate a suitable 3D print G-code for multiple object printing, as is known in the field.

The piston 270 was set to its retracted position as shown in Figure **4,** i.e. the chamber 262 is in the open or "fill" position as shown in Figure 2C and the heating element 264 was set to 180°C to maintain the temperature of the composition 111 in the regulating module 260.

The directional flow valve 260 was set to its first of "feed" configuration to allow the composition 111 to flow from the extruder outlet 129 to the chamber 262 of the regulating module 260.

### (1B) CHARGING OF THE REGULATING MODULE

The extruder module screws 118 were rotated at 100 rpm. The powder feed mixture 110 was charged to the system hopper 112 at 0.1 kg/hr. This feeding was continued so the material 110 was conveyed and passed through the extruder 110 towards the dispensing apparatus 200. As the composition 111 is conveyed, it melts and mixes due to the temperature rise it experiences from the heater elements 122 of the extrusion apparatus 100. This was continued until the pressure in the dispensing apparatus 200 reaches 20 bar indicating that the chamber 262 of the regulating module 206 is filled with the Plasdone-Acetaminophen composition.

The feeding of the materials 110 into the extruder 101 and the rotation of the extruder screws 118 was then paused.

### (1C) PRINTING OF DOSE FORMS

The operation of the print phase was commenced by activation of the G-code which controls the X-Y-Z motion of the print platform 310 via motors 381,382,383 and materials deposition via motor 272 of regulating module 270 to dispense the composition 111 from the chamber 262.

Simultaneously, the directional flow valve 250 is set to its second or "dispense" configuration to create the flow path for the composition from chamber 262 to nozzle 252. The composition 111 is then printed by deposition of additive layers governed by the G-code. As the deposition commences the deposited composition 111 is solidified as it cools to form the oral solid dose form(s). Printed dose form weights are confirmed by weight sensor 387. The oral solid dose forms were then recovered from the print platform 310.

Utilising the above steps singular and multiple dose forms were printed by repetition of the operation of the print phase and/or by use of suitable G-code generated from a CAD drawing of a multiple of dose forms to generate a multiple object print as described above. This may depend upon the number of dose forms required (e.g. a single or small number of units for testing versus a large number of units for production).

### (1D) EXTENSION OF DEPOSITION AND PRINTING FOR PRODUCTION AND REFILLING THE REGULATING MODULE

When larger numbers of oral solid dose forms were being printed (beyond the materials holding capacity of the chamber 262, the following additional steps were taken.

As the chamber 262 empties as the full volume of the composition 111 is dispensed from the module 260, the limit switch 268 is activated. This causes the control unit 400 to command printing to be paused. At this point the directional flow valve 250 was actuated to position it to its first or "feed" configuration to allow flow of the composition 111 from the extruder outlet 129 to the regulation chamber 262.

The extrusion module screws 118 and the feeder module 112 were restarted and the piston 270 retracted back to enable the chamber 262 to be refilled with the composition 111. As previously, the filling is continued until the pressure in the chamber 262 reached 20 bar to indicate that the chamber 262 was full. The extruder screws 118 and feeding module 112 were then paused as above.

The directional flow valve 250 was actuated to move it to its second or "dispense" configuration to allow flow of the composition from the chamber 262 to the nozzle 252. At this point printing was resumed as described above in paragraph 1C. This cycle can be repeated as required until sufficient dosage forms are produced.

It should be appreciated that the specific conditions of temperature control across the system 5, rotational speed of the screws 118 within the extruder 101 and other operational parameters are subject to optimisation of operation, which may depend in particular to the specific composition 111 being used.

Within the above example, variants of the Plasdone-Acetaminophen composition were printed using parameters identified below, in order to exemplify non-limiting examples of conditions that can be used within the system 5.

Tables 1 and 2 exemplifies non-limiting modifications of individual set points used with regards the extruder speed, extruder output temperature, and dispensing module temperature to generate the 3D printed dose forms across a range of conditions and compositions.

**Table 1: Composition variance**

| % Acetaminophen: Total Acetaminophen + Plasdone Mass | | Extruder Exit and Deposition module Temp (°C) | | Extruder Speed (rpm) | |
|---|---|---|---|---|---|
| | 10 | | 170 | | 100 |
| | 20 | | 155 | | 100 |
| | 30 | | 140 | | 100 |
| | 40 | | 140 | | 100 |
| | 50 | | 140 | | 100 |
| | 60 | | 140 | | 100 |
| | 70 | | 140 | | 100 |

**Table 2: Within a composition of 10% Acetaminophen - Plasdone composition the following, non-limiting conditions were used:**

| Process print sequence | | Extruder Exit and Deposition module Temp (°C) | | Extruder Speed (rpm) | |
|---|---|---|---|---|---|
| | 1 | | 180 | | 100 |
| | 2 | | 170 | | 100 |
| | 3 | | 160 | | 100 |
| | 4 | | 155 | | 100 |
| | 5 | | 150 | | 100 |
| | 6 | | 145 | | 100 |
| | 7 | | 140 | | 100 |
| | 8 | | 140 | | 50 |
| | 9 | | 135 | | 100 |
| | 10 | | 135 | | 75 |
| | 11 | | 135 | | 50 |

### Example 2. Printing of a Plasdone S630- Acetaminophen formulations into a receiving container such as a sachet/blister pack

As in the previous example, this formulation of components is used to illustrate a formulation system that is typically *not* suitable for printing using existing fused filament fabrication (FFF 3DP) methods, but can be printed using the present system and method. This example illustrates the deposition directly into a blister pack/sachet container that is then used as a component of primary packaging for the product.

### (2A) PREPARATION OF SYSTEM:

The preparation relating to the extruder 101 was similar to the preparation described in example 1, but with a feed rate set to 0.11kg/hr.

A blister pack of pre-determined, suitable geometry was placed and retained on the print platform 310.

The screw 118 speed set point was set to 100 rpm (using controller of drive motor (118)).

The print platform bed 385 and hence receiving container/blister pack was set to 30°C and monitored/controlled by temperature sensor 386.

Using CAD software, an oral solid dose form was drawn (in this case an 8 mm diameter by 3 mm tall cylindrical tablet shape) and a G-code file was generated to control the X-Y-Z motion of the printer platform 310 and the deposition rate/motion of the piston 270 of the regulating module 260 during the printing of the composition 111. It will be appreciated that singular or multiple dose forms can be drawn in CAD software and laid out spatially to generate a suitable 3D print G-code for multiple object printing, as is known in the field.

In this case, the multiple printing head configuration illustrated in **Figures 7-9** was used to generate simultaneous printing of multiple dose forms.

The piston 570 in each module 560 was set to its retracted position and the heating element 564 was set to 180°C to maintain the temperature of the composition 111 in the regulating module 560. The directional flow valve 560 was set to its first of "feed" configuration to allow the composition 111 to flow from the extruder outlet 129 to the chamber 562 of the regulating modules 560.

### (2B) CHARGING OF THE DEPOSITION MODULE

Step 2B was as described in step B above, except that the powder feed mixture 110 was charged to the system hopper 112 at 0.11kg/hr. Once the pressure in each of the dispensing apparatus 500 reached 20 bar, the feeding of the materials 110 into the extruder 101 and the rotation of the extruder screws 118 was paused.

### (2C) PRINTING OF THE DOSE FORM(S)

The operation of the print phase was commenced by activation of the G-code which compensates for the geometry of the receiving blister/container package and controls the X-Y-Z motion of the print platform 310 via motors 381,382,383 and materials deposition via motors 572 of each regulating module 570 to dispense the composition 111 from each chamber 562. Simultaneously, the directional flow valve 260 were set to their second or "dispense" configuration to create the flow path for the composition 111 from chambers 562 to nozzles 552. The composition 111 was then printed by deposition of additive layers governed by the G-code. As the deposition commences the deposited composition 111 solidified as it cooled to form the oral solid dose forms. Printed dose form weights were confirmed by weight sensor 387. The oral solid dose forms were then recovered from the print platform 310.

Utilising the above steps multiple dose forms were printed by repetition of the operation of the print phase and by use of suitable G-code generated from a CAD drawing of a multiple of dose forms in conjunction with the geometry of the packaging thus generating a multiple object print to fill the packaging as described above.

### (2D) EXTENSION OF DEPOSITION AND PRINTING FOR PRODUCTION AND REFILLING THE DEPOSITION DEVICE

This step was performed as in paragraph 1D above, for each dispensing module 500.

### Example 3. Printing of an Affinisol- Acetaminophen formulation

This formulation of components in this example are used to illustrate a formulation system that is *not* suitable for printing using existing fused filament fabrication (FFF 3DP) methods, but can be printed using the present system and method.

Affinisol^{™}(hydroxyl-propyl-methyl-cellulose) - Acetaminophen formulations post extrusion only have the correct mechanical properties for conventional 3D-FFF printing at compositions of below about 20wt% and above about 40wt% of drug, whilst intermediate compositions having a drug concentration between about 20 and 40 wt% have insufficient mechanical strength and flexural modulus to enable FFF methods.

The sequence of step 3A-3D in this example was generally similarly to steps 1A-1D described in relation to example 1, except that:
- In step 3A, the extruder feed rate was set to 0.11 kg/hr;
- In step 3B, feeding the composition 111 from the extruder 101 was continued until the pressure in the dispensing apparatus 200 reached 30 bar.

It will be appreciated that the adjustment in the feed rate and/or maximum "filling" pressure of the piston chamber 262 depends on the particular composition being used, including for example its rheological properties.

This process was conducted for a range of non-limiting Affinisol-Acetaminophen mixture compositions with the following parameters shown in Table 3:

**Table 3: Composition variance**

| % Acetaminophen: Total Acetaminophen + Affinisol Mass | | Extruder Exit and Deposition module Temp (°C) | | Extruder Speed (rpm) | | X-Y-Z bed temperature | |
|---|---|---|---|---|---|---|---|
| | 10 | | 180 | | 100 | | 100 |
| | 10 | | 170 | | 100 | | 100 |
| | 10 | | 160 | | 100 | | 100 |
| | 10 | | 150 | | 100 | | 100 |
| | 10 | | 150 | | 50 | | 100 |
| | 20 | | 150 | | 50 | | 100 |
| | 20 | | 145 | | 50 | | 100 |
| | 30 | | 140 | | 100 | | 90 |
| | 30 | | 145 | | 100 | | 90 |
| | 40 | | 145 | | 50 | | 100 |
| | 40 | | 145 | | 50 | | 80 |
| | 50 | | 145 | | 100 | | 80 |

### Example 4. Printing of a Soluplus - Mefanamic Acid formulation

This formulation of components in this example are used to illustrate a formulation system that can *not* be printed using existing fused filament fabrication (FFF 3DP) methods. Soluplus^{™} (Polyvinyl caprolactam-polyvinyl acetate-polyethylene glycol graft copolymer from BASF) is conventionally mixed with a plasticiser (see e.g. Hanpin Lim, Stephen W Hoag., Plasticizer Effects on Physical-Mechanical Properties of Solvent Cast Soluplus^{®} Films, May 2013, AAPS PharmSciTech) in order to produce mechanical properties to support its downstream processing and handling. This renders Soluplus difficult to fabricate and 3DP by conventional FFF means. Beneficial aspects of Soluplus and Mefanamic Acid systems are described in e.g. "Improving Consistency for a Mefenamic Acid Immediate Release Formulation", Elke Prasad John Robertson & Gavin W.Halbert, Journal of Pharmaceutical Sciences, Volume 109, Issue 11, November 2020, Pages 3462-3470.

The sequence of step 4A-4D in this example was generally similarly to steps 1A-1D described in relation to example 1, except that:
- In step 4A:
   ∘ the staged heating elements 122 of the melt extruding apparatus 100 were set to 20°C at the funnel inlet 114 and suitable temperature profile to raise the temperature of the materials 111 conveyed along the length of the extruder 101 from the feed funnel 114 to 125°C at a discharge end 129 thereof;
   ∘ the screw 118 speed set point was set to 50 rpm (using controller of drive motor (118));
   ∘ The print platform 610 of the printing apparatus 300 was set to 100°C and monitored/controlled by temperature sensor 386;
   ∘ The heating element 264 was set to 125°C to maintain the temperature of the composition 111 in the regulating module 260.
- In step 4B:
   ∘ the extruder module screws 118 were rotated at 50 rpm;
   ∘ feeding the composition 111 from the extruder 101 was continued until the pressure in the dispensing apparatus 200 reached 30 bar;
- In step 4D, refilling the composition 111 was continued until the pressure in the dispensing apparatus 200 reached 30 bar.

### Example 5: Printing of a PVA - Acetaminophen formulation

This formulation of components in this example are used to illustrate a formulation system that can *not* be printed using existing fused filament fabrication (FFF 3DP) methods.

Polyvinyl Alcohol (PVA) is conventionally mixed with a plasticiser such as sorbitol to enable its post extrusion handling. (see for e.g. "Effect of Sorbitol Plasticizer on the Structure and Properties of Melt Processed Polyvinyl Alcohol Films" Huafeng Tian, Di Liu, Yuanyuan Yao, Songbai Ma, Xing Zhang, Aimin Xiang. J Food Sci. 2017 Dec; 82(12):2926-2932.). This renders PVA-based formulations difficult to fabricate and 3DP by conventional FFF means.

The sequence of step 5A-5D in this example was generally similarly to steps 1A-1D described in relation to example 1, except that:
- In step 5A:
   ∘ a powder mixture of acetaminophen and PVA (50:50 wt% composition) was prepared (offline) in a suitable powder mixer;
   ∘ the staged heating elements 122 of the melt extruding apparatus 100 were set to 20°C at the funnel inlet 114 and suitable temperature profile to raise the temperature of the materials 111 conveyed along the length of the extruder 101 from the feed funnel 114 to 135°C at a discharge end 129 thereof;
   ∘ the screw 118 speed set point was set to 50 rpm (using controller of drive motor (118));
   ∘ The print platform 610 of the printing apparatus 300 was set to 80°C and monitored/controlled by temperature sensor 386;
   ∘ The heating element 264 was set to 135°C to maintain the temperature of the composition 111 in the regulating module 260;
- In step 5B:
   ∘ the extruder module screws 118 were rotated at 50 rpm;
   ∘ feeding the composition 111 from the extruder 101 was continued until the pressure in the dispensing apparatus 200 reached 30 bar;
- In step 5D, refilling the composition 111 was continued until the pressure in the dispensing apparatus 200 reached 30 bar.

It will be appreciated that the above examples are for illustration purposes only, and are not intended to limit the scope of the invention.

## Claims

1. A dispensing apparatus (200) configured for dispensing a pharmaceutical composition (111), the dispensing apparatus comprising:
at least one inlet (251) configured for receiving a pharmaceutical composition;
at least one outlet (252) configured for dispensing the composition;
at least one directional flow valve (250) located between the at least one inlet and the at least one outlet; and
at least one regulating module (260) in fluid communication with a respective directional flow valve (250), wherein the at least one regulating module is a volumetric regulating module and is configured to control and/or regulate flow of the composition to at least one outlet (252).

2. A dispensing apparatus according to claim 1, wherein the at least one volumetric regulating module (260) is configured to control and/or regulate flow of the composition to at least one outlet (252) in a volumetric manner.

3. A dispensing apparatus according to any preceding claim, wherein the at least one inlet (251) is arranged to be in fluid communication with a delivery apparatus (100) configured to deliver the composition in a molten state,
optionally wherein the delivery apparatus (100) comprises an extrusion apparatus.

4. A dispensing apparatus according to any preceding claim, wherein the at least one outlet (252) is arranged to be in fluid communication with a printing apparatus (300) or part thereof.

5. A dispensing apparatus according to any preceding claim, wherein the at least one directional flow valve (250) is configured to control a flow path of the composition between the/an inlet (251) and the/an outlet (252).

6. A dispensing apparatus according to any preceding claim, wherein the/each directional flow valve (250) has a plurality of configurations.

7. A dispensing apparatus according to claim 6, wherein the/each directional flow valve (250) has a first or "feed" configuration configured to allow flow of the composition from the inlet or from a respective inlet (251) to the regulating module or to a respective regulating module (260); and a second or "dispense" configuration configured to allow flow of the composition from the regulating module or from a respective regulating module (260) to the outlet or to a respective outlet (252),
and/or wherein the/each directional flow valve (250) has a third or "recirculation" configuration configured to allow flow of the composition from the/an inlet (251) to a recirculation outlet (659), the recirculation outlet being configured to be in fluid communication with a feeding inlet (119) of the delivery apparatus,
and/or wherein the/each directional flow valve (250) has a fourth or "discharge" configuration configured to allow flow of the composition from the inlet to a discharge port (234),
and/or wherein the/each directional flow valve (250) has a fifth or "closed" configuration configured to prevent flow of the composition within the dispensing apparatus.

8. A dispensing apparatus according to any preceding claim, wherein the/each regulating module (260) comprises a chamber (262) configured to receive the composition,
optionally wherein the chamber (262) has a chamber inlet (263) in fluid communication with a respective directional flow valve (250).

9. A dispensing apparatus according to claim 8, wherein the/each regulating module (260) comprises a regulation actuator (272) configured to actuate filling of the chamber (262) with the composition and/or dispensing of the composition from the chamber (262), optionally wherein the/each regulating module comprises at least one positioning sensor (268) configured to detect the configuration of the regulation module and/or the position of the regulation actuator;
and/or wherein the/each regulating module comprises one or more pressure sensors and/or temperature sensors (266)

10. A dispensing apparatus according to claim 8 or claim 9, wherein the dispensing apparatus comprises analytical means to monitor and/or analyse one or more parameters of the composition.

11. A system for manufacturing a solid pharmaceutical dose form, the system comprising:
at least one delivery apparatus (100) configured to deliver a pharmaceutical composition (111);
at least one printing apparatus (300); and
at least one dispensing apparatus (200) according to any of claims 1 to 10 provided between the at least one delivery apparatus and the at least one printing apparatus.

12. A system according to claim 11, wherein the delivery apparatus (100) comprises an extrusion apparatus configured to deliver the composition in a molten state.

13. A method of dispensing a pharmaceutical composition, the method comprising:
receiving a pharmaceutical composition (111) from at least one inlet (251) to at least one volumetric regulating module (260) via at least one directional flow valve (250); and
dispensing the composition from the at least one volumetric regulating module (260) to at least one outlet (252) in a volumetric manner via the at least one directional flow valve (250).

14. A method according to claim 13, comprising controlling and/or regulating a flow of the composition to at least one outlet (252) via the at least one volumetric regulating module (260).

15. A method of manufacturing a solid pharmaceutical dose form, the method comprising dispensing a pharmaceutical composition to a printing apparatus (300) and/or onto a printing platform (310) using a dispensing apparatus (200) according to any of claims 1 to 10, a system according to any of claims 11 to 12, or according to a method of any of claims 13 to 14.

## Patentansprüche

1. Abgabeeinrichtung (200), die zur Abgabe einer pharmazeutischen Zusammensetzung (111) konfiguriert ist, wobei die Abgabeeinrichtung umfasst:
mindestens einen Einlass (251), der zur Aufnahme einer pharmazeutischen Zusammensetzung konfiguriert ist;
mindestens einen Auslass (252), der zur Abgabe der Zusammensetzung konfiguriert ist;
mindestens ein Wegventil (250), das sich zwischen dem mindestens einen Einlass und dem mindestens einen Auslass befindet; und
mindestens ein Regelmodul (260) in strömungstechnischer Kommunikation mit einem jeweiligen Wegventil (250), wobei das mindestens eine Regelmodul ein volumetrisches Regelmodul ist, und konfiguriert ist, um den Fluss der Zusammensetzung zu mindestens einem Auslass (252) zu steuern und/oder zu regeln.

2. Abgabeeinrichtung nach Anspruch 1, wobei das mindestens eine volumetrische Regelmodul (260) konfiguriert ist, um den Fluss der Zusammensetzung zu mindestens einem Auslass (252) volumetrisch zu steuern und/oder zu regeln.

3. Abgabeeinrichtung nach einem vorstehenden Anspruch, wobei der mindestens eine Einlass (251) angeordnet ist, um in strömungstechnischer Kommunikation mit einer Zuführeinrichtung (100) zu sein, die konfiguriert ist, um die Zusammensetzung in einem geschmolzenen Zustand abzugeben,
wobei die Zuführeinrichtung (100) optional eine Extrudiereinrichtung umfasst.

4. Abgabeeinrichtung nach einem vorstehenden Anspruch, wobei der mindestens eine Auslass (252) angeordnet ist, um in strömungstechnischer Kommunikation mit einer Druckeinrichtung (300) oder einem Teil davon zu sein.

5. Abgabeeinrichtung nach einem vorstehenden Anspruch, wobei das mindestens eine Wegventil (250) konfiguriert ist, um einen Strömungsweg der Zusammensetzung zwischen dem/einem Einlass (251) und dem/einem Ausgang (252) zu steuern.

6. Abgabeeinrichtung nach einem vorstehenden Anspruch, wobei das/jedes Wegventil (250) eine Vielzahl von Konfigurationen aufweist.

7. Abgabeeinrichtung nach Anspruch 6, wobei das/jedes Wegventil (250) eine erste oder "Zufuhr"-Konfiguration aufweist, die konfiguriert ist, um einen Fluss der Zusammensetzung vom Einlass oder von einem jeweiligen Einlass (251) zum Regelmodul oder zu einem jeweiligen Regelmodul (260) zu ermöglichen; und eine zweite oder "Abgabe"-Konfiguration, die konfiguriert ist, um einen Fluss der Zusammensetzung vom Regelmodul oder von einem jeweiligen Regelmodul (260) zum Auslass oder zu einem jeweiligen Auslass (252) zu ermöglichen,
und/oder wobei das/jedes Wegventil (250) eine dritte oder "Rezirkulations"-Konfiguration, die konfiguriert ist, um den Durchfluss der Zusammensetzung von dem/einem Einlass (251) zu einem Rezirkulationsauslass (659) zu ermöglichen, wobei der Rezirkulationsauslass konfiguriert ist, um mit einem Zufuhreinlass (119) der Abgabeeinrichtung in strömungstechnischer Kommunikation zu sein,
und/oder wobei das/jedes Wegventil (250) eine vierte oder "Ableitungs"-Konfiguration aufweist, die konfiguriert ist, um einen Fluss der Zusammensetzung vom Einlass zu einem Auslassanschluss (234) zu ermöglichen,
und/oder wobei das/jedes Wegventil (250) eine fünfte oder "geschlossene" Konfiguration aufweist, die konfiguriert ist, um einen Fluss der Zusammensetzung innerhalb der Abgabeeinrichtung zu verhindern.

8. Abgabeeinrichtung nach einem vorstehenden Anspruch, wobei das/jedes Regelmodul (260) eine Kammer (262) umfasst, die konfiguriert ist, um die Zusammensetzung aufzunehmen,
wobei die Kammer (262) optional einen Kammereinlass (263) in strömungstechnischer Kommunikation mit einem jeweiligen Wegventil (250) aufweist.

9. Abgabeeinrichtung nach Anspruch 8, wobei das/jedes Regelmodul (260) eine Regelungsbetätigungsvorrichtung (272) umfasst, die konfiguriert ist, um eine Befüllung der Kammer (262) mit der Zusammensetzung und/oder Abgabe der Zusammensetzung aus der Kammer (262) zu betätigen, wobei das/jedes Regelmodul optional mindestens einen Positionierungssensor (268) umfasst, der konfiguriert ist, um die Konfiguration des Regelmoduls und/oder die Position der Regelungsbetätigungsvorrichtung zu erkennen;
und/oder wobei das/jedes Regelmodul einen oder mehrere Drucksensoren und/oder Temperatursensoren (266) umfasst

10. Abgabeeinrichtung nach Anspruch 8 oder 9, wobei die Abgabeeinrichtung analytische Mittel zur Überwachung umfasst, um einen oder mehrere Parameter der Zusammensetzung zu überwachen und/oder zu analysieren.

11. System zur Herstellung einer festen pharmazeutischen Darreichungsform, wobei das System umfasst:
mindestens eine Zuführeinrichtung (100), die konfiguriert ist, um eine pharmazeutische Zusammensetzung (111) abzugeben;
mindestens eine Druckeinrichtung (300); und
mindestens eine Abgabeeinrichtung (200) nach einem der Ansprüche 1 bis 10, die zwischen der mindestens einen Zuführeinrichtung und der mindestens einen Druckeinrichtung bereitgestellt ist.

12. System nach Anspruch 11, wobei die Zuführeinrichtung (100) eine Extrudiereinrichtung umfasst, die konfiguriert ist, um die Zusammensetzung in einem geschmolzenen Zustand zuzuführen.

13. Verfahren zum Abgeben einer pharmazeutischen Zusammensetzung, wobei das Verfahren umfasst:
Aufnehmen einer pharmazeutischen Zusammensetzung (111) von mindestens einem Einlass (251) zu mindestens einem volumetrischen Regelmodul (260) über mindestens ein Wegventil (250); und
Abgeben der Zusammensetzung aus dem mindestens einen volumetrischen Regelmodul (260) über das mindestens eine Wegventil (250) volumetrisch zu mindestens einem Auslass (252).

14. Verfahren nach Anspruch 13, umfassend Steuern und/oder Regeln eines Flusses der Zusammensetzung zu mindestens einem Auslass (252) über das mindestens eine volumetrische Regelmodul (260).

15. Verfahren zur Herstellung einer festen pharmazeutischen Darreichungsform, wobei das Verfahren Abgeben einer pharmazeutischen Zusammensetzung an eine Druckeinrichtung (300) und/oder auf eine Druckplattform (310) unter Verwendung einer Abgabeeinrichtung (200) nach einem der Ansprüche 1 bis 10, ein System nach einem der Ansprüche 11 bis 12 oder nach einem Verfahren nach einem der Ansprüche 13 bis 14 umfasst.

## Revendications

1. Appareil de distribution (200) configuré pour distribuer une composition pharmaceutique (111), l'appareil de distribution comprenant :
au moins une entrée (251) configurée pour recevoir une composition pharmaceutique ;
au moins une sortie (252) configurée pour distribuer la composition ;
au moins une vanne de flux directionnel (250) située entre l'au moins une entrée et l'au moins une sortie ; et
au moins un module de régulation (260) en communication fluidique avec une vanne de flux directionnel (250) respective, dans lequel l'au moins un module de régulation est un module de régulation volumétrique et est configuré pour commander et/ou réguler un flux de la composition vers au moins une sortie (252).

2. Appareil de distribution selon la revendication 1, dans lequel l'au moins un module de régulation volumétrique (260) est configuré pour commander et/ou réguler le flux de la composition vers au moins une sortie (252) de manière volumétrique.

3. Appareil de distribution selon une quelconque revendication précédente, dans lequel l'au moins une entrée (251) est agencée pour être en communication fluidique avec un appareil de délivrance (100) configuré pour délivrer la composition à l'état fondu,
éventuellement dans lequel l'appareil de délivrance (100) comprend un appareil d'extrusion.

4. Appareil de distribution selon une quelconque revendication précédente, dans lequel l'au moins une sortie (252) est agencée pour être en communication fluidique avec un appareil d'impression (300) ou une partie de celui-ci.

5. Appareil de distribution selon une quelconque revendication précédente, dans lequel l'au moins une vanne de flux directionnel (250) est configurée pour commander un chemin d'écoulement de la composition entre la/une entrée (251) et la/une sortie (252).

6. Appareil de distribution selon une quelconque revendication précédente, dans lequel la/chaque vanne de flux directionnel (250) comporte une pluralité de configurations.

7. Appareil de distribution selon la revendication 6, dans lequel la/chaque vanne de flux directionnel (250) comporte une première configuration ou « alimentation » configurée pour permettre l'écoulement de la composition depuis l'entrée ou depuis une entrée respective (251) vers le module de régulation ou vers un module de régulation (260) respectif; et une deuxième configuration ou « distribution » configurée pour permettre l'écoulement de la composition depuis le module de régulation ou depuis un module de régulation (260) respectif vers la sortie ou vers une sortie (252) respective.
et/ou dans lequel la/chaque vanne de flux directionnel (250) comporte une troisième configuration ou « recirculation » configurée pour permettre l'écoulement de la composition depuis la/une entrée (251) vers une sortie de recirculation (659), la sortie de recirculation étant configurée pour être en communication fluidique avec une entrée d'alimentation (119) de l'appareil de délivrance,
et/ou dans lequel la/chaque vanne de flux directionnel (250) comporte une quatrième configuration ou « décharge » configurée pour permettre l'écoulement de la composition de l'entrée vers un orifice de décharge (234),
et/ou dans lequel la/chaque vanne de flux directionnel (250) comporte une cinquième configuration ou « fermée » configurée pour empêcher l'écoulement de la composition à l'intérieur de l'appareil de distribution.

8. Appareil de distribution selon une quelconque revendication précédente, dans lequel le/chaque module de régulation (260) comprend une chambre (262) configurée pour recevoir la composition,
éventuellement dans lequel la chambre (262) comporte une entrée de chambre (263) en communication fluidique avec une vanne de flux directionnel (250) respective.

9. Appareil de distribution selon la revendication 8, dans lequel le/chaque module de régulation (260) comprend un actionneur de régulation (272) configuré pour actionner le remplissage de la chambre (262) avec la composition et/ou la distribution de la composition à partir de la chambre (262), éventuellement dans lequel le/chaque module de régulation comprend au moins un capteur de position (268) configuré pour détecter la configuration du module de régulation et/ou la position de l'actionneur de régulation ;
et/ou dans lequel le/chaque module de régulation comprend un ou plusieurs capteurs de pression et/ou capteurs de température (266)

10. Appareil de distribution selon la revendication 8 ou la revendication 9, dans lequel l'appareil de distribution comprend des moyens analytiques pour surveiller et/ou analyser un ou plusieurs paramètres de la composition.

11. Système de fabrication d'une forme de dose pharmaceutique solide, le système comprenant :
au moins un appareil de délivrance (100) configuré pour délivrer une composition pharmaceutique (111) ;
au moins un appareil d'impression (300) ; et
au moins un appareil de distribution (200) selon l'une quelconque des revendications 1 à 10 disposé entre l'au moins un appareil de délivrance et l'au moins un appareil d'impression.

12. Système selon la revendication 11, dans lequel l'appareil de délivrance (100) comprend un appareil d'extrusion configuré pour délivrer la composition à l'état fondu.

13. Procédé de distribution d'une composition pharmaceutique, le procédé comprenant :
la réception d'une composition pharmaceutique (111) à partir d'au moins une entrée (251) vers au moins un module de régulation volumétrique (260) via au moins une vanne de flux directionnel (250) ; et
la distribution de la composition à partir de l'au moins un module de régulation volumétrique (260) vers au moins une sortie (252) de manière volumétrique via l'au moins une vanne de flux directionnel (250).

14. Procédé selon la revendication 13, comprenant la commande et/ou la régulation d'un flux de la composition vers au moins une sortie (252) via l'au moins un module de régulation volumétrique (260).

15. Procédé de fabrication d'une forme de dose pharmaceutique solide, le procédé comprenant la distribution d'une composition pharmaceutique à un appareil d'impression (300) et/ou sur une plateforme d'impression (310) en utilisant un appareil de distribution (200) selon l'une quelconque des revendications 1 à 10, un système selon l'une quelconque des revendications 11 à 12, ou selon un procédé selon l'une quelconque des revendications 13 à 14.
